# EUROPEAN PATENT SPECIFICATION

(11) **EP 3 344 361 B1**
(45) Date of publication and mention of the grant of the patent: **04.10.2023**
(21) Application number: 16759769.9
(22) Date of filing: 01.09.2016
(51) Int. Cl.: B01D 35/30, C02F 1/44, C02F 1/42

(54) **SET OF PARTS FOR ASSEMBLING HEAD PART FOR FORMING A LIQUID TREATMENT APPARATUS AND METHOD OF ASSEMBLING**
TEILESET ZUM ZUSAMMENBAU EINES KOPFTEILS ZUR HERSTELLUNG EINER FLÜSSIGKEITSBEHANDLUNGSVORRICHTUNG UND VERFAHREN ZUM AUFBAU
SET DE PIÈCES POUR ASSEMBLAGE D'UNE PARTIE DE TÊTE POUR FORMATION D'UN APPAREIL DE TRAITEMENT DE LIQUIDE ET LEDIT MÉTHODE D'ASSEMBLAGE

(30) Priority: 02.09.2015 EP 15183505
(43) Date of publication of application: 11.07.2018
(60) Divisional application: 18188923.9
(73) Proprietor: BRITA SE, 65232 Taunusstein (DE)
(72) Inventor: ZOELLER, Jochen, 56355 Nastaetten (DE)
(86) International application number: PCT/EP2016/070566
(87) International publication number: WO 2017/037148

(56) References cited:
- EP-A2- 2 570 165

## Description

The invention relates to a set of parts for assembling a head part for forming a liquid treatment apparatus, which head part includes a housing, into which at least part of a connecting head of a liquid treatment cartridge is insertable.

The invention also relates to a method of assembling such a head part.

EP 2 570 165 A1 discloses a filter unit having a body portion on which a laterally extending key member is disposed. A filter head assembly includes an interference member forming a portion of an exterior wall portion of a cylindrical receiver adapted to receive all or at least a portion of a proximal end of the filter unit and is designed to prevent a filter unit that lacks a laterally extending key member from engaging the filter head assembly.

Head parts of the above-mentioned type are intended for essentially permanent installation and connection to supply and delivery lines at a point of use. Manufacturers of such head parts and liquid treatment apparatus generally supply a range of liquid treatment cartridges, e.g. for different types of liquid treatment or with different treatment capacities. In the main, only one or a limited sub-set of the range of cartridges is intended for use at any one site. A problem lies in ensuring that the other cartridges of the range are not used, whilst using as many common parts as possible in the head parts for the different cartridges from the range.

It is an object of the invention to provide a set of parts for assembling a head part and a method of assembling a head part that address this problem.

The problem is solved according to a first aspect of the invention by a set of parts according to claim 1.

A manufacturer can manufacture one shape and size of housing, which can be individualised to allow only use with certain ones from a range of principally compatible cartridges through the use of the cartridge recognition component. The latter is a distinct component, assembled to the housing. The cartridge recognition component and the feature on the connecting head of the cartridge include at least one projection and recess that fit together during at least a phase of the insertion and movement into the operative position in the head part. They need not interlock in the operative position.

In an embodiment, the housing is provided with an aperture, any one of the cartridge recognition components is insertable through the aperture into the operative position, and the cartridge recognition component is fixable in the operative position.

This embodiment addresses the problem that a manufacturer of a range of different types of cartridges that each potentially fit the head part faces. The cartridge recognition component ensures that the head part is only compatible with fewer than all the different types of cartridge, e.g. only one. A manufacturer would like to avoid having to stock head parts for each cartridge type, especially if there is a risk of the stock becoming obsolete. This problem is solved by enabling the head part to be fully assembled except for the cartridge recognition component. These intermediate products can be stocked, indeed shipped to technicians for installation at a point of use. The assembly is completed easily by inserting the appropriate cartridge recognition component from a range of differently-shaped cartridge recognition components through the aperture into its operative position and then fixing it in that operative position. This last action can be carried out by the manufacturer prior to shipping or by a technician at the point of use. The pre-assembled head part need not be taken apart to mount the cartridge recognition component.

In a variant of this embodiment, the housing includes a shell formed of at least two, e.g. only two, parts joined together, the aperture through which the cartridge recognition component is insertable is provided in at least one of the shell parts, and the cartridge recognition component is releasable from the operative position only by disassembling the shell parts.

In this variant, the individualisation of the head part can be undone, but only by disassembling at least the outer part of the head part, namely the shell. The cartridge recognition component and optionally further components of the head part may be held between the shell parts. This obviates the need for a separate mounting frame.

In a particular variant hereof, the aperture is provided in only one of the shell parts.

This provides a neater finish, because edges of the aperture defined by separate shell parts need not be aligned exactly in assembly. It then also becomes easier to ensure that the aperture is completely closed by the inserted cartridge recognition component. With minimal or no gaps between the aperture edges and cartridge recognition component, attempts to remove the cartridge recognition component from the assembled head part can be thwarted. There is no way of obtaining purchase on the cartridge recognition component, once inserted.

In a variant of the embodiment in which the housing is provided with an aperture, any one of the cartridge recognition components is insertable through the aperture into the operative position and the cartridge component is fixable in the operative position, at least one of each cartridge recognition component and the housing includes at least one latching part arranged to snap into interlocking engagement with a part of the other of the cartridge recognition component and the housing on insertion of the cartridge recognition component into the operative position.

This simplifies manufacturing. Moreover, the lock on the cartridge recognition component can be provide inside the housing of the head part, since there is no need to provide access for welding tools or the like. It is thus more difficult to remove the cartridge recognition component without disassembling the head part. Where the cartridge recognition component is held between shell parts of the housing, the configuration of the housing may be such that the latching part is held in interlocking engagement with one part by at least one other part. Then, disassembling the shell parts will still allow the cartridge recognition component to be released. This is something a manufacturer could offer to customers who return the head part.

In a variant of the embodiment of the head part in which the housing is provided with an aperture, any one of the cartridge recognition components is insertable through the aperture into the operative position and the cartridge component is fixable in the operative position, each of the cartridge recognition components has an elongated shape, and each of the cartridge recognition components is insertable through the aperture in longitudinal direction.

The longitudinal shape allows the exposed part to have features of which the longitudinal position also determines compatibility with a certain cartridge type. The cartridge recognition component may include at least one section shaped essentially as a strip, with a section for engaging the cartridge feature protruding from a flat major surface thereof. The insertion in longitudinal direction allows the aperture to be relatively small. The inserted cartridge recognition component can also be supported along at least part of its length on one side, the exposed part being on the opposite side. This provides good support and positioning for engaging the feature or features of the inserted cartridge. Where at least one of the cartridge recognition component and the housing includes at least one latching part arranged to snap into interlocking engagement with a part of the other of the cartridge recognition component and the housing on insertion of the cartridge recognition component into the operative position, the cartridge recognition component may buckle somewhat on insertion, thus providing an elastic force holding the latching part in engagement.

In a variant of the embodiment of the head part in which the housing is provided with an aperture, any one of the cartridge recognition components is insertable through the aperture into the operative position and the cartridge component is fixable in the operative position, the exposed part of each of the cartridge recognition components faces in a direction transverse, e.g. perpendicular, to a direction of insertion through the aperture in the operative position.

This allows the inserted cartridge recognition component to be backed by the housing on a side opposite to the exposed part. Stronger support and more accurate positioning for engagement with the feature or features of the cartridge are thereby provided.

In a variant of the embodiment of the head part in which the housing is provided with an aperture, any one of the cartridge recognition components is insertable through the aperture into the operative position and fixable in the operative position, a part of the cartridge recognition component essentially fills the aperture in the operative position.

This provides a relatively neat finish and makes it more difficult for unauthorised persons to remove the cartridge recognition component.

In a variant of the embodiment of the head part in which the housing is provided with an aperture, any one of the cartridge recognition components is insertable through the aperture into the operative position and fixable in the operative position, the exposed part of each of the cartridge recognition components includes at least one section protruding into a cavity for receiving at least part of the connecting head in the operative position.

The feature of the liquid treatment cartridge should thus be a recess or groove into which the protruding part enters, when at least part of the connecting head is inserted into the cavity. The protruding part would otherwise block this part of the connecting head, preventing full insertion. By providing the protruding part on the cartridge recognition component and the recess or groove on the cartridge, the protruding part may also protrude in a direction transverse to a direction of insertion of at least part of the connecting head into the head part. It would enter into and slide along a groove provided on the cartridge, provided that the groove is in the correct position and has the correct width and length.

Thus, in a variant of the embodiment of the head part in which the housing is provided with an aperture, any one of the cartridge recognition components is insertable through the aperture into the operative position and fixable in the operative position, the exposed part of each cartridge recognition component faces in a direction at an angle, e.g. essentially transverse, to a direction of insertion of the at least part of the connecting head in the operative position.

The engaging parts of the cartridge recognition component and the cartridge can be relatively short and shallow, respectively. It is still possible to stop an incompatible cartridge from being inserted very far by positioning protruding parts appropriately and making recesses or grooves for receiving the protruding part or parts relatively long.

In an embodiment, the head part includes a receiving part defining a cavity for receiving at least part of the connecting head, wherein the receiving part is journalled for movement between first and second positions within the housing with the received part of the connecting head, wherein the received part of the connecting head is insertable in the first position, and wherein the liquid treatment cartridge is lockable to the head part by moving the receiving part with the received part of the connecting head into the second position.

The cartridge recognition component may prevent incompatible cartridges from being inserted at all in the first position. Alternatively, it may prevent them from fully reaching the second position. In either case, incompatible cartridges cannot be locked to the head part and will easily fall out again.

In an embodiment, the head part includes a receiving part defining a cavity for receiving at least part of the connecting head, wherein the receiving part is journalled for movement between first and second positions within the housing with the received part of the connecting head, wherein the receiving part is provided with an aperture providing access to the cavity, and wherein each of the cartridge recognition components, in the operative position, protrudes into the aperture in the receiving part in at least one position of the receiving part within the housing.

The receiving part is the part that engages the received part of the connecting head. It may be a quite intricate part, e.g. being shaped to ensure sealed liquid communication of ports of the connecting head with ports of the head part. It also needs to be dimensioned accurately to ensure smooth movement within the head part. It is therefore desirable to use the same receiving part for all head parts. Moreover, the receiving part should be relatively compact to allow a relatively wide range of movement. In this embodiment, the housing carries the cartridge recognition component and is thus individualised for one or a select few cartridge types, even though the housing does not directly engage the inserted part of the liquid treatment cartridge. The receiving part can be relatively compact, only carrying those parts necessary for journaling and, for example, for establishing liquid communication with ports in the connecting head of the liquid treatment cartridge.

In a variant of this embodiment, the cavity tapers in the direction of insertion, and the aperture of the receiving part is provided in a wall delimiting the cavity laterally with respect to an axis corresponding to the direction of insertion.

The taper may help centre the inserted part of the connecting head on the axis and ensures that the connecting head contacts the side walls defining the cavity only towards the end of the insertion. This reduces frictional forces acting on the cartridge, which might e.g. dislodge sealing rings on lateral surfaces of the connecting head and generally make insertion more difficult. The aperture in the side wall of the receiving part can be relatively large and allows for the use of relatively shallow recognition features in the form of recesses or grooves and relatively short protruding recognition features.

In a variant of the embodiment in which the head part includes a receiving part defining a cavity for receiving at least part of the connecting head, wherein the receiving part is journalled for movement between first and second positions within the housing with the received part of the connecting head, wherein the receiving part is provided with an aperture providing access to the cavity, and wherein each of the cartridge recognition components, in the operative position, protrudes into the aperture in the receiving part in at least one position of the receiving part within the housing, the movement is between a first and a second position, the received part of the connecting head is insertable into the receiving part in only the first of the first and second positions, and each of the cartridge recognition components, in the operative position, protrudes into the aperture of the receiving part in only the first of the first and second positions.

Thus, the cartridge recognition component prevents insertion of incompatible cartridges. They immediately fall back out again. Because the cartridge recognition component protrudes into the aperture of the receiving part in only the first of the first and second positions, it need not be movable with the receiving part. This helps avoid an unnecessarily complex design of the head part.

In a variant of the embodiment in which the head part includes a receiving part defining a cavity for receiving at least part of the connecting head, wherein the receiving part is journalled for movement between first and second positions within the housing with the received part of the connecting head, wherein the receiving part is provided with an aperture providing access to the cavity, and wherein each of the cartridge recognition components, in the operative position, protrudes into the aperture in the receiving part in at least one position of the receiving part within the housing, each of the cartridge recognition components includes at least one section protruding, in the operative position, through the aperture of the receiving part into the cavity in at least one position of the receiving part within the housing.

The protruding section ensures that incompatible cartridges cannot fully occupy the cavity.

In a variant of the embodiment in which the head part includes a receiving part defining a cavity for receiving at least part of the connecting head, wherein the receiving part is journalled for movement between first and second positions within the housing with the received part of the connecting head, wherein the receiving part is provided with an aperture providing access to the cavity, and wherein each of the cartridge recognition components, in the operative position, protrudes into the aperture in the receiving part in at least one position of the receiving part within the housing, the aperture of the receiving part is provided in a planar interior surface section of the receiving part.

This surface section can engage a correspondingly planar exterior surface section of the received part of the connecting head of the cartridge, so that the rotational position of the cartridge is well defined. This aligns the features of the cartridge that engage the cartridge recognition component relatively well.

In a variant of the embodiment in which the head part includes a receiving part defining a cavity for receiving at least part of the connecting head, wherein the receiving part is journalled for movement between first and second positions within the housing with the received part of the connecting head, wherein the receiving part is provided with an aperture providing access to the cavity, and wherein each of the cartridge recognition components, in the operative position, protrudes into the aperture in the receiving part in at least one position of the receiving part within the housing, the receiving part is journalled for movement in a plane, and the aperture of the receiving part faces in a direction parallel to the plane.

In this variant, the cartridge recognition component ensures that incompatible cartridges cannot reach the initial or final position defined for the receiving part. The cartridge recognition component and connecting head do not engage continually during this movement, providing less resistance.

In an embodiment, the head part includes a receiving part defining a cavity for receiving at least part of a connecting head provided with at least one port in liquid communication with an interior of the liquid treatment cartridge, such that the ports are in sealed liquid communication with respective ports of the receiving part on insertion of the received part of the connecting head, wherein the receiving part is journalled for movement between first and second positions within the housing with the received part of the connecting head.

The sealed liquid communication between the port or ports of the connecting head and a port or ports of the head part is thus not dependent on accurate positioning of the receiving part with respect to the housing.

In a variant of this embodiment, the aperture of the receiving part is on a different side of the receiving part to the ports.

The ports can thus be relatively large for a compact receiving part.

In a variant of the embodiment in which the head part includes a receiving part defining a cavity for receiving at least part of a connecting head provided with at least one port in liquid communication with an interior of the liquid treatment cartridge, such that the ports are in sealed liquid communication with respective ports of the receiving part on insertion of the received part of the connecting head, wherein the receiving part is journalled for movement between first and second positions within the housing with the received part of the connecting head, the receiving part has at least three ports, e.g. at least four ports, and the receiving part is arranged to receive the connecting head such that ports of the connecting head in liquid communication with an interior of the liquid treatment cartridge are in sealed liquid communication with respective ports of the receiving part on insertion of the received part of the connecting head.

Having relatively many ports makes it possible to use the same basic head part and receiving part design and the same basic connecting head design with many different types of liquid treatment cartridge. All ports of the liquid treatment cartridge can still be provided at one end thereof. Taking the field of water treatment, one liquid treatment cartridge can include a membrane filtration device arranged to operate in cross-flow mode, so that there are at least one inlet and two outlet ports (one for retentate and one for filtrate). This includes reverse osmosis membrane filtration devices. Another type of liquid treatment cartridge can be arranged to treat water by ion exchange, e.g. to reduce its carbonate hardness. This cartridge can have an internal bypass, so that there are at least two inlets and at least one outlet. If there are four ports, any port not strictly required by the principle of operation of the type of treatment concerned can still be used to balance the total input and output port aperture area. This results in a high-throughput liquid treatment cartridge.

In a variant of the embodiment in which the head part includes a receiving part defining a cavity for receiving at least part of a connecting head provided with at least one port in liquid communication with an interior of the liquid treatment cartridge, such that the ports are in sealed liquid communication with respective ports of the receiving part on insertion of the received part of the connecting head, wherein the receiving part is journalled for movement between first and second positions within the housing with the received part of the connecting head, includes at least one of at least one inlet and at least one outlet, at least one of which is placeable in liquid communication with at least one respective one of the ports of the receiving part in at least the second position.

Thus, the receiving part need not be provided with a flexible connector to an adjacent device or conduit. Instead, the adjacent device or conduit is connected to the inlet or outlet of the head part. The receiving part can be fully located within a housing shell, since it need not be accessible for connection to conduits delivering liquid to be treated or carrying treated liquid to a connected appliance. Instead, a rigid connection between such a conduit and the inlet and/or outlet can be provided.

In a variant hereof, the head part includes a valve mechanism for interrupting the liquid communication in at least the first position.

Thus, the liquid treatment cartridge can be removed or at least partly inserted into the cavity defined by the receiving part without risk of leakage.

In a particular variant, the valve mechanism is configured such that liquid communication is dependent on the position of the receiving part.

Thus, only a compatible liquid treatment cartridge can be inserted and moved with the receiving part to open the valve and allow the liquid treatment cartridge to function.

In a particular variant hereof, the receiving part is arranged to function as a movable valve member of the valve mechanism, at least one, e.g. all of ports of the receiving part in liquid communication with the cavity are aligned in the second position with respective ports of the housing that are at least placeable in liquid communication with one of the at least one inlets and outlets, and wherein the ports of at least one of the receiving part and the housing aligned in the second position are blocked by the other of the receiving part and the housing in the first position.

This is a relatively simple valve mechanism construction that also avoids that a user forgets to actuate the valve mechanism so as to interrupt the liquid communication in at least the first position. Instead, movement of the cartridge with the receiving part automatically closes and opens the valve mechanism in the right positions. Because the receiving part functions as a movable valve member, complicated linkages between the receiving part and a separate movable valve member are not required.

In a particular variant hereof, a channel is formed in the receiving part, and the channel is arranged, in at least the first position, to place at least one of the ports of the housing aligned with a respective port of the receiving part in the second position in sealed liquid communication with at least one other of the ports of the housing aligned with a respective port of the receiving part in the second position.

In this variant, the liquid treatment cartridge can be removed without interrupting the flow of liquid between at least one inlet and at least one outlet of the head part. This can be useful where the head part is one of a number placed in a row for sequentially treating a liquid. It may be that the particular treatment effected by the removed liquid treatment cartridge is not required. It is then not necessary to disconnect the head part.

In a variant of any embodiment in which the head part includes a receiving part defining a cavity for receiving at least part of the connecting head, wherein the receiving part is journalled for movement between first and second positions within the housing with the received part of the connecting head, the movement of the receiving part includes at least a component corresponding to an intrinsic rotation in a plane parallel to a direction of insertion of the received part of the connecting head into the receiving part.

This allows the head part to be mounted above a floor, e.g. on a wall, with the liquid treatment cartridge, in use, being attached to it from below. The liquid treatment cartridge need be only slightly shorter than the distance between the head part and the floor, because the liquid treatment cartridge is swivelled between the first and second positions, such that a longitudinal axis of the liquid treatment cartridge is at an angle to the vertical in the first position and at a smaller or no angle in the second position.

In a variant of any embodiment in which the head part includes a receiving part defining a cavity for receiving at least part of the connecting head, wherein the receiving part is journalled for movement between first and second positions within the housing with the received part of the connecting head, the movement includes at least a component corresponding to a displacement of the receiving part relative to the housing.

This may increase the range of movement in a particular direction without the need to provide for swivelling movement of the liquid treatment cartridge over a very large angle.

In a particular variant hereof, the receiving part has an axis aligned with the direction of insertion in the first position and the displacement includes at least a component essentially perpendicular to the axis as oriented in the second position.

This embodiment is particularly suitable if the head part is mounted to a wall. The liquid treatment cartridge will be generally oriented with its axis parallel to the wall in the second position. To allow it to be held comfortably during removal or mounting, the displacement component essentially perpendicular to the axis as oriented in the second position moves it away from the wall during movement from the second to the first position and towards the wall during movement from the first to the second position.

In a variant of any embodiment in which the head part includes a receiving part defining a cavity for receiving at least part of the connecting head, wherein the receiving part is journalled for movement between first and second positions within the housing with the received part of the connecting head, the receiving part includes at least one groove for receiving at least one alignment part on the connecting head when at least part of the connecting head is inserted into the cavity, and the groove is provided in a section of a wall having a surface at least partially delimiting the cavity laterally with respect to an axis of the receiving part corresponding to a direction of insertion.

This facilitates insertion of the received part of the connecting head into the cavity in the first position of the receiving part.

In a variant of any embodiment in which the head part includes a receiving part defining a cavity for receiving at least part of the connecting head, wherein the receiving part is journalled for movement between first and second positions within the housing with the received part of the connecting head, the housing includes at least one section defining a support surface for supporting a protruding part of the liquid treatment cartridge during movement of the receiving part with the received part of the connecting head.

This addresses the problem that it is difficult to guide movement of the receiving part or to provide adequate journaling of the receiving part if the full weight of the liquid treatment cartridge acts on the receiving part between the first and second positions. In this embodiment, there is a separation of functions. The support surface or surfaces provide support for the protruding part of the liquid treatment cartridge as the connecting head thereof is guided by the receiving part. To provide balanced support, at least a pair of sections defining a respective support surface for supporting a respective protruding part of the liquid treatment cartridge during movement of the receiving part between the first and the second positions may be provided on either side of the receiving part.

In a variant hereof, at least one of the sections defines at least one detent for the protruding part of the liquid treatment cartridge.

This allows at least one of the first and second positions to be defined, in that the protruding part will enter the detent in that position. In particular, the detent may define the second position, because that is the position in which the liquid treatment cartridge is present. Neither the receiving part nor the liquid treatment cartridge is easily knocked out of the second position in this embodiment. Rather, a deliberate force exerted on the cartridge is required to release the receiving part from the second position.

In a variant of any embodiment in which the head part includes a receiving part defining a cavity for receiving at least part of the connecting head, wherein the receiving part is journalled for movement between first and second positions within the housing with the received part of the connecting head, at least part of the connecting head is insertable in the first position, and the head part further includes at least one latching device for retaining the receiving part in the first position.

The head part can thus be configured to allow insertion in essentially only the first position. After removal of a liquid treatment cartridge, the receiving part is held in the correct position for receiving at least part of a replacement liquid treatment cartridge.

In a variant hereof, the latching device includes a resilient part for returning it to a configuration for retaining the receiving part in the first position, and the latching device is arranged to be urged out of the configuration through engagement of the receiving part as it moves into the first position.

This allows the user to operate the latching device without having to let go of the cartridge as the receiving part is moved from the second to the first position the receiving part is automatically locked in position without the need to actuate a latch separately.

In a variant of the embodiment in which the head part includes a receiving part defining a cavity for receiving at least part of the connecting head, wherein the receiving part is journalled for movement between first and second positions within the housing with the received part of the connecting head, at least part of the connecting head is insertable in the first position, and the head part further includes at least one latching device for retaining the receiving part in the first position, the latching device includes a part for engagement by the liquid treatment cartridge on insertion of the received part of the connecting head into the cavity, such that the latching device releases the receiving part.

This allows the user to cause the receiving part to be released without having to let go of the replacement cartridge as it is inserted. It can be inserted with both hands. The mere act of inserting it releases the receiving part for movement into the second position. There can be a relatively strong shape-lock between the latching device and the receiving part in the first position in the absence of a cartridge with a connecting head at least in part inserted in the cavity.

In a variant of the embodiment in which the head part includes a receiving part defining a cavity for receiving at least part of the connecting head, wherein the receiving part is journalled for movement between first and second positions within the housing with the received part of the connecting head, at least part of the connecting head is insertable in the first position, and the head part further includes at least one latching device for retaining the receiving part in the first position, the receiving part is journalled for movement in a plane, and the latching device includes at least one resilient arm having a free end arranged to flex in a direction transverse to the plane of movement on engagement with at least one of the receiving part and the liquid treatment cartridge

This is a relatively simple construction in which a section of the resilient arm engages the receiving part directly and a section provides the resilient force for urging the engaging section into the configuration in which it engages. The latching device may be U-shaped, and the arms arranged on opposite sides of the receiving part in the first position. In such an embodiment, the free ends of the arms are urged apart in opposite directions and snap back into place when the receiving part is moved into the first position. Strong anchoring of the relatively immobile ends of the arms to the remainder of the head part is not required. Rather, the U-shaped part can be an insert or inlay.

In a variant of this embodiment, the arm includes a section, e.g. a pawl at a free end, having a facet for engagement by the liquid treatment cartridge facing at least in part in a direction opposite to the direction of insertion of the received part of the connecting head into the receiving part.

The facet may in particular face only in part in a direction opposite to the direction of insertion. The liquid treatment cartridge thus engages this facet to urge the arm out of the position of engagement with the receiving part. The same or a further section may have a further facet facing at least, e.g. only, in part in a direction parallel to the plane of rotation for engaging the receiving part as it moves into the first position. An opposite surface for latching to the receiving part may face predominantly or only in a direction parallel to the plane of rotation in that case. Such slanting facets function as inclined planes to move the arm out of engagement with the receiving part on exertion of a relatively small force. The opposite surface for latching to the receiving part, on the other hand, provides a relatively strong shape-lock.

In a variant of any embodiment in which the head part includes a receiving part defining a cavity for receiving at least part of the connecting head, wherein the receiving part is journalled for movement between first and second positions within the housing with the received part of the connecting head, the receiving part is journalled by protrusions guided in guides for receiving the protrusions.

This is a relatively simple way of enabling the receiving part to carry out a relatively complicated movement, e.g. combining displacement of the entire receiving part relative to the housing with an intrinsic rotation of the receiving part. A guide may include at least one of a gate and a groove for guiding an inserted protrusion. The guide may be defined by a single component or an assembly of components.

In a variant of this embodiment, the protrusions are provided on the receiving part.

The remainder of the head part thus includes the component or assembly of components defining the guides (gates and/or grooves). The receiving part is relatively compact and will generally require space for ports and an aperture into or indeed through which the cartridge recognition component can protrude. The receiving part need only be provided with the relatively small protrusions in this embodiment. The housing is large enough to provide space for the grooves, because it must anyway accommodate the receiving part during its movement between the first and second positions.

In a variant of any embodiment in which the head part includes a receiving part defining a cavity for receiving at least part of the connecting head, wherein the receiving part is journalled for movement between first and second positions within the housing with the received part of the connecting head, and wherein the receiving part is journalled by protrusions guided in guides for receiving the protrusions, at least one pair of a protrusion and guide is provided on either side of at least the exposed part of the cartridge recognition component.

By providing at least one pair on either side of at least the exposed part of the cartridge recognition component, misalignments between this part and the features of a compatible liquid treatment cartridge are more easily prevented.

In an embodiment, the at least two cartridge recognition components having differently-shaped exposed parts are further provided with at least corresponding surface sections having a different respective appearance, e.g. a different respective colour.

This makes it easier for a manufacturer or technician to keep the differently-shaped cartridge recognition components apart during assembly.

The corresponding surface sections may include sections externally visible in the operative position.

This allows one to determine which type of liquid treatment cartridge the head part has been customised for use with when the exposed part of the cartridge recognition component is no longer visible.

According to a further aspect, the invention provides a method of assembling a head part according to claim 13.

In an embodiment, the cartridge recognition components having differently-shaped exposed parts include at least corresponding surface sections having an appearance differing in at least one respect, e.g. in terms of their colour.

That is to say that the entire surface of the cartridge recognition component may have an appearance uniquely associated with the shape of the exposed part or a surface section at a corresponding position and of a corresponding shape may have an appearance uniquely associated with the shape of the exposed part.

In an embodiment, at least the surface section with the different appearance is externally visible when the cartridge recognition component is mounted to the housing.

A liquid treatment apparatus may include a replaceable liquid treatment cartridge and the head part.

The liquid treatment cartridge may be provided with an exterior surface section of which the appearance matches that of at least a section of a surface of the cartridge recognition component in at least one respect, e.g. in terms of their colour.

The liquid treatment cartridge may be selected from a set of functionally different liquid treatment cartridges, each provided with a housing, wherein the selected liquid treatment cartridge differs in shape only in terms of the at least one feature for engaging the exposed part of the cartridge recognition component, and wherein the exterior surface section has an appearance matching that of at least a section of the cartridge recognition component in at least one respect, e.g. in terms of its colour. The section of the cartridge recognition includes at least a section externally visible in the operative position.

Thus, the head part and liquid treatment cartridge are colour-coded, patterned, or otherwise marked to ensure that the correct type of liquid treatment cartridge is inserted into the head part.

In an embodiment of the apparatus, the liquid treatment cartridge includes at least one feature shaped to fit the exposed part of the cartridge recognition component, and the feature is defined in a part joined to a remainder of the liquid treatment cartridge, e.g. a remainder of the connecting head.

By using a separate part, a remainder of the housing of the liquid treatment cartridge can be the same for all types of liquid treatment cartridge. They will differ only in terms of the components contained in the housing and the part bearing the feature for recognising the type of the liquid treatment cartridge. Where the connecting head is comprised in a moulded cartridge housing part, one mould can be used, which may have a relatively complex shape. The liquid treatment cartridge is marked out as being of a particular type only by the feature joined to this moulded cartridge housing part.

In a variant hereof, the part in which the feature is defined is joined by a bond, e.g. welded to the remainder of the liquid treatment cartridge or joined by an adhesive bond.

This is a relatively sure way of preventing separation of the part bearing the feature from the housing of the liquid treatment cartridge.

In an embodiment of the liquid treatment apparatus, the liquid treatment cartridge includes a housing including a housing part forming an axial end of the housing, which housing part includes the connecting head, wherein the connecting head includes at least two, e.g. at least three or four, liquid ports, each at an end of a respective channel defined by the housing part, and wherein the liquid treatment cartridge includes at least one separate flow conductor part on the inside of the housing, attached to the housing part and including at least one conduit for conducting liquid so as to separate interior ends of at least two of the channels from those of at least one other of the channels.

Liquid treatment cartridges for a relatively wide range of different treatments can be manufactured with common housing components. The flow conductor parts adapt the cartridge to a particular treatment, together with any treatment medium and/or filtration elements contained in the housing. The more ports there are, the wider the range of different types of liquid treatment cartridge that can be provided with a common housing. Ports surplus to requirements for a particular type of treatment can be plugged or connected in parallel.

In a particular variant, at least one of the at least one flow conductor parts is plugged into the housing part, e.g. into an interior end of at least one of the channels.

This embodiment is relatively easy to assemble. Few or no fasteners are required to attach the at least one flow conductor parts to the housing part. Furthermore, the housing part can be relatively compact, since there is no need to provide space for a separate connection mechanism if the flow conductor parts are plugged into the interior ends of the channels. In a variant, the plugged-in part is held in place by a friction fit between it and the housing part. The friction-fit may be provided by at least one sealing element surrounding a conduit wall between the plugged-in end of the conduit and the channel wall.

In an embodiment of the apparatus in which the liquid treatment cartridge includes a housing including a housing part forming an axial end of the housing, which housing part includes the connecting head, wherein the connecting head includes at least two, e.g. at least three or four, liquid ports, each at an end of a respective channel defined by the housing part, and wherein the liquid treatment cartridge includes at least one separate flow conductor part on the inside of the housing, attached to the housing part and including at least one conduit for conducting liquid so as to separate interior ends of at least two of the channels from those of at least one other of the channels, the interior end of at least one of the channels is provided within at least one of the other channels.

This contributes to keeping the width of the connecting head relatively low for a given channel diameter, compared to having the interior ends positioned side by side. Furthermore, the flow conductor parts can easily be used to adapt the cartridge from a default configuration, in which the flows of liquid passing through the respective ports mingle, to one in which they are kept separate in the housing part. This is accomplished by at least one flow conductor part including a conduit extending from the interior end through the at least one channel in which the interior end is provided. A ring-channel is then formed between the innermost one of these channels and the flow conductor part extending through it.

In a variant hereof, at least end sections at the interior ends of the channels are arranged concentrically.

This makes it relatively easy to keep flows of liquid within the cartridge housing separate, by separating them radially, but also to keep flow patterns simple and relatively uniform. Uniform axial flow conditions are in particular achievable by centring channels and conduits on a central axis of the cartridge housing and making conduits essentially rotationally symmetric.

In an embodiment of the liquid treatment apparatus, at least one of a receiving part of the head part and a connecting head of the liquid treatment cartridge includes at least one alignment part for aligning an axis of the liquid treatment cartridge in a direction of insertion with the receiving part of the head part, at least one alignment part being arranged to be inserted into a groove of the other of the receiving part and the connecting head when the received part of the connecting head is inserted, and the alignment parts for insertion into a groove are arranged to contact the groove at multiple axial locations simultaneously.

Because a straight line is defined by at least two points, axial alignment of the receiving part and the liquid treatment cartridge is achievable with only the alignment parts and grooves. This ensures that a compatible liquid treatment cartridge will engage the cartridge recognition component correctly. Rejection of a compatible liquid treatment cartridge due to misalignment can be avoided.

In a variant of this embodiment, at least one of the alignment parts is a ridge on an exterior surface of the connecting head.

Compared to a row of separate alignment parts providing multiple points of contact at multiple axial locations, a ridge allows for easier insertion of the connecting head into the receiving part. Furthermore, it is easier to provide a relatively strong ridge, which can also contribute to strengthening the wall on which it is provided. The ridge may extend in an essentially straight line parallel to the axis.

In a variant hereof, the liquid treatment cartridge includes a housing including a housing part forming an axial end of the housing, which housing part includes the connecting head, the ridge is provided on a surface section of the connecting head inclined with respect to the axis, such that the connecting head tapers towards the axial end, and an elevation of at least a section of the ridge with respect to the surface section increases in axial direction towards the axial end of the cartridge housing.

In this variant, the ports of the connecting head can also be provided in inclined surface sections inclined with respect to the axis such that the connecting head tapers toward the axial end of the housing. Sealing elements provided on or around the ports of the cartridge contact the side wall of a cavity defined in the receiving part for receiving at least part of the connecting head only at the end of the path of insertion. This reduces the risk of damage to the sealing element or elements and of their being dislodged. Furthermore, there is less friction to be overcome during insertion. Because of the increasing elevation of the ridge with respect to the surface section, the ridge can enter the groove at the start of insertion to fulfil its alignment role.

In a variant of the embodiment in which at least one of a receiving part of the head part and a connecting head of the liquid treatment cartridge includes at least one alignment part for aligning an axis of the liquid treatment cartridge in a direction of insertion with the receiving part of the head part, at least one alignment part being arranged to be inserted into a groove of the other of the receiving part and the connecting head when the received part of the connecting head is inserted, and the alignment parts for insertion into a groove are arranged to contact the groove at multiple axial locations simultaneously, the connecting head is provided with the alignment parts, and at least one of the alignment parts functions as a retaining part for locking the liquid treatment cartridge to the head part.

This embodiment avoids the need for separate retaining features, e.g. on the connecting head. There is thus more space for the alignment part or parts and the cartridge ports.

In a variant hereof, the liquid treatment cartridge includes a housing including a housing part forming an axial end of the housing, which housing part includes the connecting head, wherein an axial end of the retaining part distal to the axial end of the housing has a rounded shape.

The axial end can move relatively easily along a ledge with which it cooperates to retain the liquid treatment cartridge in the head part, even when the receiving part is still being moved. The movement of the receiving part with the received part of the connecting head can include a pivoting component.

In an embodiment of the liquid treatment apparatus, the liquid treatment cartridge includes at least one liquid treatment medium for the treatment of liquid in a diffusive process, e.g. by sorption, for example by ion exchange.

The liquid treatment medium may include an ion exchange resin. The ion exchange resin may include a cation exchange resin, e.g. a weakly acidic cation exchange resin. At least some of the cation exchange resin may be in the hydrogen form. A further amount of the cation exchange resin may be loaded with an alkali metal ion for buffering purposes.

A range of such liquid treatment cartridges can be manufactured for the treatment of an aqueous liquid, e.g. mains drinking water. Each will include a different mixture or amount of liquid treatment medium, appropriate to the liquid to be treated. The cartridge recognition component is selected according to the composition of the liquid prevailing at the point of use of the liquid treatment apparatus. Thus, only the liquid treatment cartridge or cartridges appropriate to that composition can be used.

The invention will be explained in further detail with reference to the accompanying drawings, in which:
- Fig. 1: is a perspective view of a liquid treatment apparatus including a replaceable liquid treatment cartridge and a head part;
- Fig. 2: is a perspective view of the liquid treatment cartridge;
- Fig. 3: is a detailed perspective view of a part of the liquid treatment cartridge including a connecting head;
- Fig. 4: is a first detailed side view of the connecting head;
- Fig. 5: is a second detailed side view of the connecting head;
- Fig. 6: is a perspective cross-sectional view of the connecting head;
- Fig. 7: is a perspective view from below of the head part;
- Fig. 8: is a first perspective view of the inside of the head part;
- Fig. 9: is a second perspective view of the inside of the head part;
- Fig. 10: is a perspective view of a receiving part journalled within the head part;
- Fig. 11: is a first perspective view into a cavity of the receiving part;
- Fig. 12: is a second perspective view into the cavity of the receiving part;
- Fig. 13: is a first perspective view of an inside of a first housing part of the head part;
- Fig. 14: is a perspective view of an inside of a second housing part of the head part;
- Fig. 15: is a second perspective view of the inside of the first housing part of the head part, with a cartridge recognition component inserted through an aperture therein;
- Fig. 16: is a first perspective view of the cartridge recognition component; and
- Fig. 17: is a second perspective view of the cartridge recognition component.

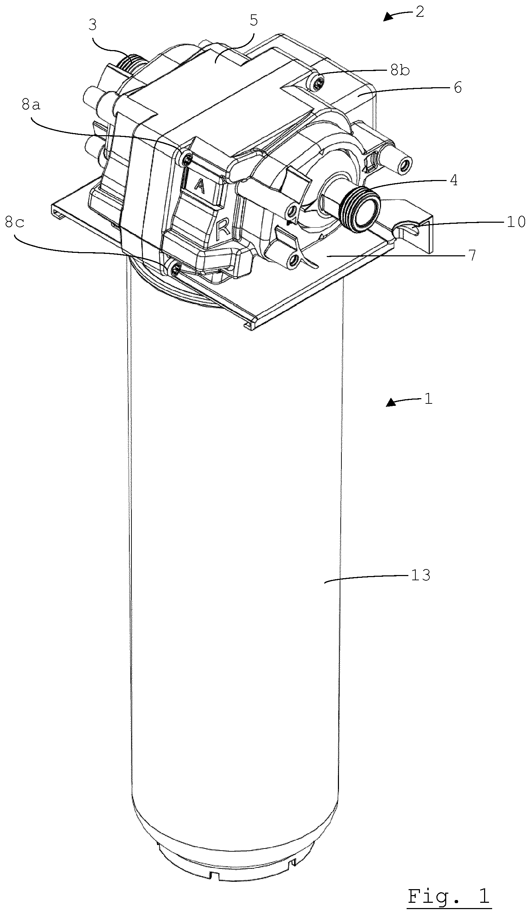

In the following, a liquid treatment apparatus (Fig. 1) for the treatment of aqueous liquids such as mains drinking water will be described. The liquid treatment apparatus includes a replaceable liquid treatment cartridge 1 and a head part 2. The head part 2 is intended for more or less permanent connection to a supply conduit (not shown) and a delivery conduit (not shown) by means of an inlet connector 3 and an outlet connector 4. For example, the mains water supply can be connected to the inlet connector 3. The outlet connector 4 can be connected to a delivery conduit leading to one or more appliances (not shown), such as a beverage machine (including in particular a machine for preparing hot beverages by extraction, such as a coffee machine), a steamer, a dish washer or the like.

The head part 2 as illustrated is configured for connection of a single cartridge 1. In another embodiment, it may be part of a multi-head device for receiving a number of liquid treatment cartridges arranged in parallel and/or in series in flow sense.

The head part 2 includes a housing including left and right housing parts 5,6 and a bottom plate 7. The left and right housing parts 5,6 form a shell. They are joined together by screws 8a-c. The bottom plate 7 is held in between the left and right housing parts 5,6, in that opposing edges thereof are received in facing recesses defined in the left and right housing parts 5,6, in the example by folded edges thereof. Conduits to which the head part 2 is connected may be led along a wall to which the head part 2 is fixed. A mounting bracket, in this example integral to the bottom plate 7, includes mounting apertures 9,10 for co-operating with screws (not shown) or similar fasteners to mount the head part 2 to the wall.

A receiving part 11 is journalled for movement between a first and a second position within the housing defined by the left and right housing parts 5,6.

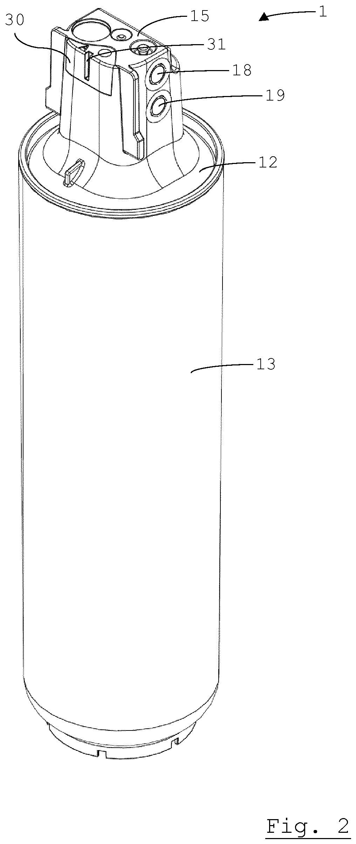

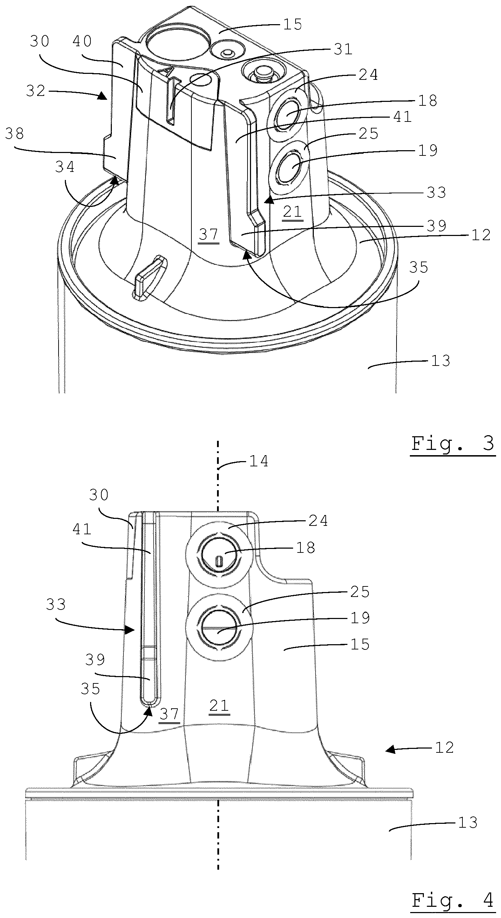

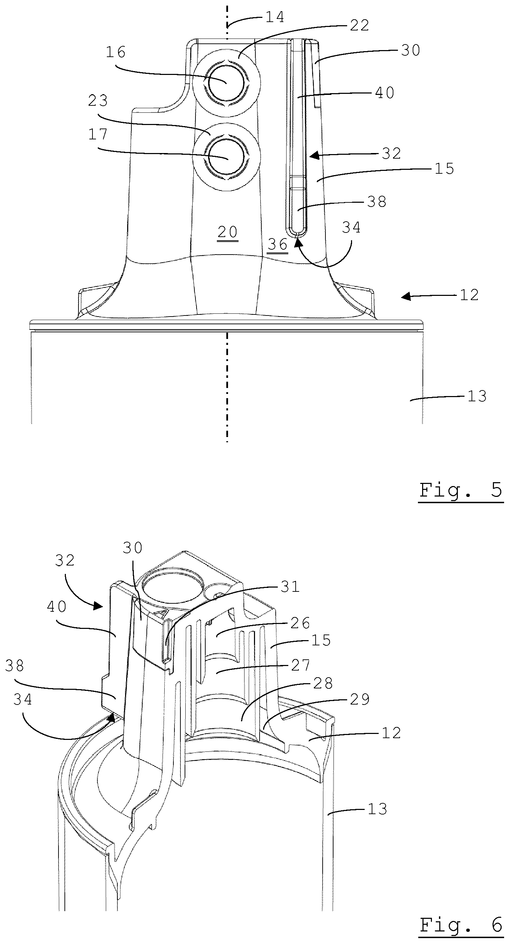

The liquid treatment cartridge 1 (Figs. 1-6) is of the type described more fully in international patent application No. PCT/EP2015/050155 of 7 January 2015. It has a housing formed by a cap-shaped housing part 12 and a vessel-shaped housing part 13. The latter is closed by the cap-shaped housing part 12 at one axial end and closed at an opposite axial end with respect to a cartridge axis 14 (Figs. 4,5). In the illustrated embodiment, the cartridge axis 14 corresponds to a longitudinal axis of the replaceable liquid treatment cartridge 1.

The cap-shaped housing part 12 includes an integral connecting head 15. At least part of the connecting head 15 is insertable into the head part 2 through an aperture in the bottom plate 7, but only when the receiving part 11 is in a first position. In the illustrated embodiment, the aperture in the bottom plate 7 facilitates the correct positioning of the liquid treatment cartridge 1 for insertion. The bottom plate 7 may be omitted in an alternative embodiment.

The connecting head 15 is provided with four cartridge ports 16-19 (Figs. 4,5) in liquid communication with an interior of the liquid treatment cartridge 1. First and second cartridge ports 16,17 (Fig. 5) are provided in a first exterior surface section 20 of the connecting head 15 that faces in a direction at an angle to the cartridge axis 14 such that the connecting head 15 tapers towards the axial end of the liquid treatment cartridge 1 at which the connecting head 15 is provided. Third and fourth cartridge ports 18,19 (Fig. 4) are provided in a second exterior surface section 21 of the connecting head 15. The second exterior surface section 21 also faces in a direction at an angle to the cartridge axis 14 such that the connecting head 15 tapers towards the axial end of the liquid treatment cartridge 1 at which the connecting head 15 is provided. The angle is larger than 45°, but smaller than 90°. The first and second exterior surface sections 20,21 face in directions of which the lateral components (with respect to the cartridge axis 14) are oppositely directed. There is thus at least one, in this example two, cartridge port on each of opposite sides of the connecting head 15. In the illustrated embodiment, the first cartridge port 16 is aligned with the third cartridge port 18. The second cartridge port 17 is aligned with the fourth cartridge port 19. Sealing rings 22-25 are mounted such as each to surround a respective one of the cartridge ports 16-19. The first and second exterior surface sections 20,21 are essentially planar, so that the sealing rings 22-25 are compressed relatively uniformly when pressed against a co-operating planar surface to form seals isolating the cartridge ports 16-19. Due to the taper, the sealing rings 22-25 are only compressed when the connecting head 15 is close to being inserted to the maximum possible extent into the cavity of the receiving part 11.

The cartridge ports 16-19 are each provided at an end of a respective channel 26-29 (Fig. 6) through the connecting head 15. End sections of at least the central three channels 26-28 are arranged concentrically, centred on the cartridge axis 14. They are directed essentially axially into the interior of the cartridge housing. The ends of the central channels 26-28 each terminate at a different axial position, so that these interior ends are provided within at least one other channel 27-29. Liquid can mingle at these ends unless they are separated by separate flow conductor parts (not shown).

The flow conductor parts can be plugged into the interior ends of the channels 26-29 to configure the basic cartridge housing for a particular use. In this way, the same cartridge housing parts 12,13 can be used to manufacture a range of different cartridge types. The relatively large number of cartridge ports 16-19 contributes to the versatility of the basic housing design. It can be used to manufacture a membrane filtration cartridge for operation in cross-flow mode (with at least one inlet, an outlet for retentate and an outlet for filtrate), a cartridge for treatment of liquid by ion exchange (e.g. reduction in total hardness or only carbonate hardness), optionally with a bypass through the cartridge past the ion exchange medium, a cartridge for demineralisation (containing both anion exchange resin and cation exchange resin), a cartridge for the treatment of liquid by sorption (e.g. using activated carbon), etc.

Because the basic shape of the connecting head 15 is the same for each of these types, an inlay 30 provided with a feature having at least one of a shape and a position unique to the cartridge type concerned is joined to the connecting head 15. In the illustrated embodiment, the feature is a slot 31, of which at least one of the width and the position relative to the remainder of the inlay 30 is unique to the cartridge type concerned. In an embodiment, the inlay 30 also has a colour unique to the cartridge type concerned. When the liquid treatment cartridge 1 is assembled, the appropriate flow conductor or conductors are inserted into the appropriate channel or channels 26-29 and the inlay 30 identifying the chosen cartridge configuration is selected. This inlay 30 is provided on the exterior of the connecting head 15. In the illustrated example, it is inserted into a recess or rebate formed in the connecting head 15 and irreversibly joined to the connecting head 15. It may be joined by bonding, e.g. adhesive bonding or welding. Ultrasonic welding is a suitable method, for example.

If the connecting head 15 is made of a thermoplastic material, it may also be possible to form the recognition feature by stamping or embossing the connecting head 15 itself with a hot tool. In that case, a separate part such as the inlay 30 can be dispensed with.

In either case, the liquid treatment cartridge 1 may be colour-coded, provided with a pattern or otherwise marked, through the use of an inlay 30 with a particular surface appearance, by means of ink printed directly onto the surface of the liquid treatment cartridge 1 or by means of a label adhered to the surface of the liquid treatment cartridge 1, for example.

The connecting head 15 is also provided with first and second alignment ridges 32,33 (Figs. 3-5) adjacent the first and second cartridge ports 16,17 and the third and fourth cartridge ports 18,19 respectively.

The alignment ridges 32,33 extend in a direction essentially parallel to the cartridge axis 14. Axial ends 34,35 distal to the axial end of the cartridge at which the connecting head 15 is provided are rounded. This facilitates pivoting of the liquid treatment cartridge 1 whilst it is supported by the alignment ridges 32,33.

The alignment ridges 32,33 are provided on curved exterior surface sections 36,37. These surface sections 36,37 face in directions at an angle to the cartridge axis 14 such that the connecting head 15 tapers in axial direction towards the axial end of the liquid treatment cartridge 1 at which the connecting head 15 is provided. Each of the alignment ridges 32,33 has a first section 38,39 and a second section 40,41 between which there is a stepped transition in elevation with respect to the surface section 36,37. The first sections 38,39 include the axial ends 34,35 distal to the axial end of the cartridge and have a larger elevation. They thus protrude further from the connecting head 15.

It is noted that the alignment ridges 32,33 protrude in opposite directions, not quite perpendicular to the curved surface sections 36,37, but perpendicular to a plane through the cartridge axis 14 that contains a locus of movement of the connecting head 15 when moved with the receiving part 11 within the head part 2.

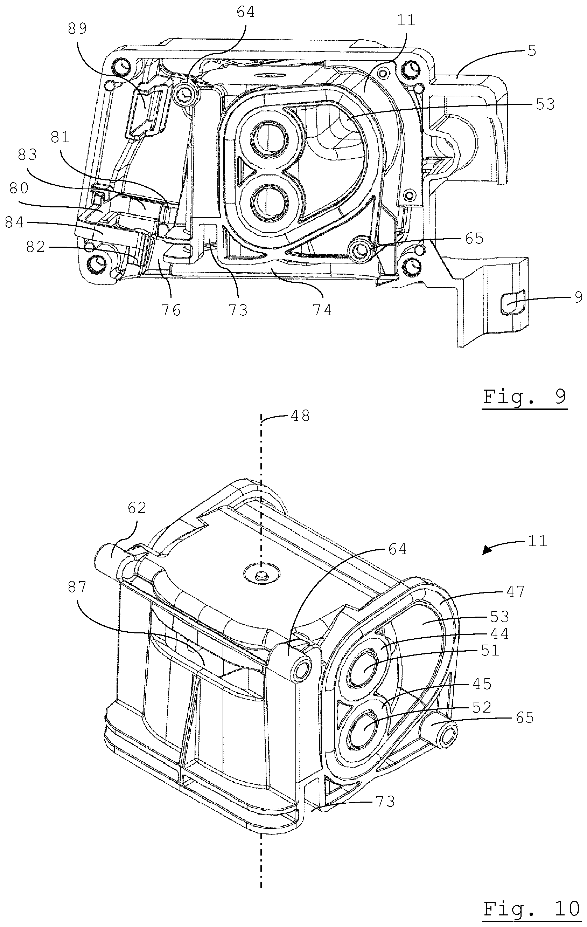

The receiving part 11 (Figs. 10-12) includes a body and first to sixth sealing elements 42-47. The body defines the cavity for receiving at least part of the connecting head 15. The cavity has a shape corresponding to that of the connecting head 15, and thus tapers in axial direction towards an end distal to a mouth of the cavity.

It is possible to define a reference axis 48 (Fig. 10) essentially aligned with the cartridge axis 14 when the connecting head 15 is inserted in the receiving part 11. This reference axis 48 is oriented essentially perpendicularly to the mouth of the cavity. The reference axis 48 lies in a plane of movement of the receiving part 11 between the first and second position within the housing of the head part 2.

The receiving part 11 is provided with four liquid-permeable ports 49-52 in side wall sections. The ports 49-52 are provided in side wall sections on opposite sides of the cavity. In the illustrated embodiment, the first and third ports 49,50 are aligned, as are the second and fourth ports 50,52.

The ports 49-52 extend through the side wall sections to provide access to the cavity. Interior side wall surface sections in which the ports 49-52 are provided are essentially planar to provide uniform compression of the cartridge sealing rings 22-25 when the connecting head 15 is inserted. When the connecting head 15 is inserted into the cavity to the maximum extent allowed, each cartridge port 16-19 is in sealed liquid communication with a respective one of the receiving part ports 49-52. The seals provided by the cartridge sealing rings 22-25 isolate the flows of liquid through the cartridge ports 16-19 from each other and from the interior of the cavity.

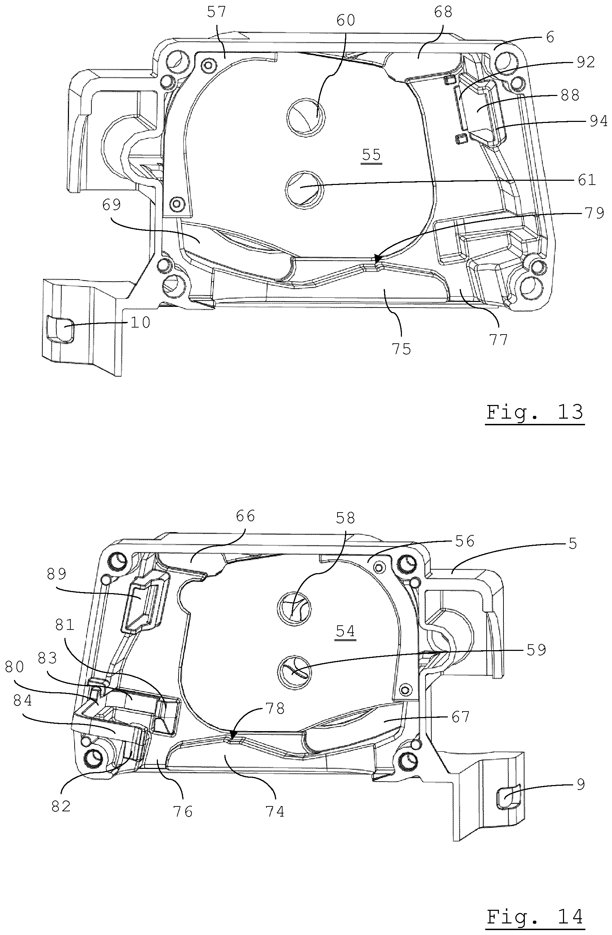

First and second sealing elements 42,43 surround only the first and second receiving part ports 49,50 on the exterior of the receiving part 11. Third and fourth sealing elements 44,45 surround only the third and fourth ports 51,52 on the exterior of the receiving part. A fifth sealing element 46 surrounds both the first and second ports 49,50 and one opening into a bypass channel 53 on one exterior side of the receiving part 11. A sixth sealing element 47 surrounds both the third and fourth ports 51,52 and an opening of the bypass channel 53 on an opposite exterior side of the receiving part 11. The sealing elements 42,43,46 on one side of the receiving part 11 all lie in essentially one common plane, as do the sealing elements 44,45,47 on the opposite side of the receiving part 11. This allows them to be pressed against respective planar interior surfaces 54,55 (Figs. 13-15) inside the housing of the head part 2 so as to maintain seals as the receiving part 11 moves between the first and second positions.

In the illustrated embodiment, these interior surfaces 54,55 are provided by left and right screening parts 56,57 forming part of the housing of the head part 2. In an alternative embodiment, they may be provided by the left and right housing parts 5,6.

The screening parts 56,57 are provided with housing ports 58-61 in the interior surfaces 54,55. In the second position of the receiving part 11 with respect to the housing of the head part 2, the receiving part ports 49-52 are each aligned with a respective one of the housing ports 58-61 such as to be in sealed liquid communication with only the port with which they are aligned. The seals are provided by the sealing elements 42-45. In the first position of the receiving part 11 with respect to the housing, the housing ports 58,59 to one side of the receiving part 11 are in sealed liquid communication with the housing ports 60,61 to the opposite side of the receiving part 11 via the bypass channel 53. The fifth and sixth sealing elements 46,47 provide the seals preventing leakage into the space in which the receiving part 11 is arranged to move.

The receiving part 11 thus functions as the movable valve element of a valve. Its position determines whether liquid flows through the liquid treatment cartridge 1. Only in the second position is such flow possible. This is also the position in which the liquid treatment cartridge 1 is locked to the head part 2. In the illustrated embodiment, the liquid treatment cartridge 1 is even suspended from the head part 2. The first position is defined to allow the part of the connecting head 15 of the liquid treatment cartridge 1 that is to be received in the receiving part 11 to be inserted.

The receiving part 11 is journalled for movement between the first and second positions by way of guide protrusions 62-65 (Figs. 10-12) on the receiving part 11 and guides 66-69 (Figs. 13-15) defined on the inside of the housing of the head part 2. The guides 66-69 receive the guide protrusions 62-65. The latter are held in the inserted position by the left and right housing parts 5,6, which are in turn held together by the screws 8a-c. It is theoretically possible to disassemble the head part 2 by loosening the screws 8a-c, at which point the bottom plate 7 and the receiving part 11 would be released. However, this is not something a user or service technician would do, because reassembly would be cumbersome.

The shape and orientation of the guides 66-69 define the shape of the movement of the receiving part 11 with respect to the head part 2.

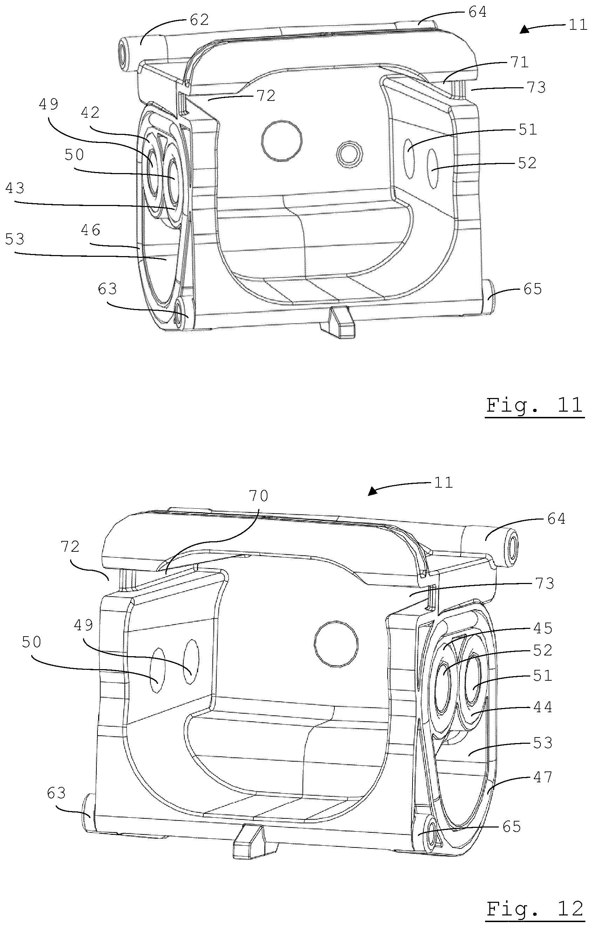

To facilitate insertion of the connecting head 15 into the cavity of the receiving part 11, the receiving part 11 is provided with alignment grooves 70,71 (Figs. 11,12) into which the alignment ridges 32,33 are insertable. The alignment grooves 70,71 extend in axial direction with respect to the reference axis 48. They are on opposite sides of the cavity defined in the receiving part 11 and face each other. At an end proximal to the mouth of the cavity, they are shaped as slits 72,73 into which the first sections 38,39 of the alignment ridges 32,33 can protrude.

The left and right housing parts 5,6 are provided with ledges 74,75 (Figs. 13-15) on which the rounded ends 34,35 are supported when the receiving part 11 moves between the first and second positions. The weight of the liquid treatment cartridge 1 thus rests on the housing of the head part 2, rather than on the receiving part. The movement of the connecting head 15 and receiving part 11 is a combination of a displacement and an intrinsic rotation, both in a plane through the reference axis 48 and perpendicular to directions in which the inlets and outlets formed by the inlet and outlet connectors 3,4, the housing ports 58-61 and the cartridge ports 16-19 face. This allows the receiving part 11 to function rather like the movable valve element of a sliding gate valve.

Gaps 76,77 (Figs. 13-15) are formed between ends of the ledges 74,75 and adjacent protruding interior structures of the housing of the head part 2. The gaps 76,77 are aligned with the alignment groove 70,71 of the receiving part 11 in the first position of the receiving part 11. The gaps 76,77 are deep and wide enough to admit the alignment ridges 32,33, which would otherwise not be able to enter the space defined inside the housing of the head part 2. Once inserted far enough, the alignment ridges 32,33 can be moved onto the ledges 74,75.

Detents 78,79 are formed in the surface of the ledges 74,75 that support the connecting head 15. The detents 78,79 define the second position. In the illustrated embodiment, they are arranged to receive the rounded ends 34,35 of the alignment ridges 32,33. The weight of the liquid treatment cartridge 1 holds the ends 34,35 in the detents 78,79 and thus the receiving part 11 and the connecting head 15 in the second position. A relatively small force is sufficient to move them out of the second position.

The position of the receiving part 11 should be retained after a connecting head 15 has been retracted, in order to allow the connecting head 15 of a replacement liquid treatment cartridge 1 to be inserted. The bypass channel 53 is then also maintained in full alignment with the housing ports 58-61. To this end, a latching device 80 is provided.

The latching device 80 is a single resilient, essentially U-shaped insert having pawls 81,82 at respective free ends of its arms 83,84. Part of the receiving part 11 is received between the arms 83,84 in the first position. The pawls 81,82 engage the slits 72,73 of the alignment grooves 70,71 from the outside in the first position. When the connecting head 15 of a replacement liquid treatment cartridge 1 is inserted, the first sections 38,39 of the alignment ridges 32,33 displace the pawls 81,82 to free the receiving part 11. Because the first sections 38,39 are the axially trailing sections, the receiving part is only freed when the connecting head 15 has been inserted to close to its maximum extent.

Such insertion is only possible if the inserted liquid treatment cartridge 1 is of the correct type. This is determined by a cartridge recognition component 85. The cartridge recognition component 85 is a component separate from the housing of the head part 2 but fixed to it in an operative position. It includes a protrusion 86 that is shaped to fit the recognition slot 31 on the connecting head 15.

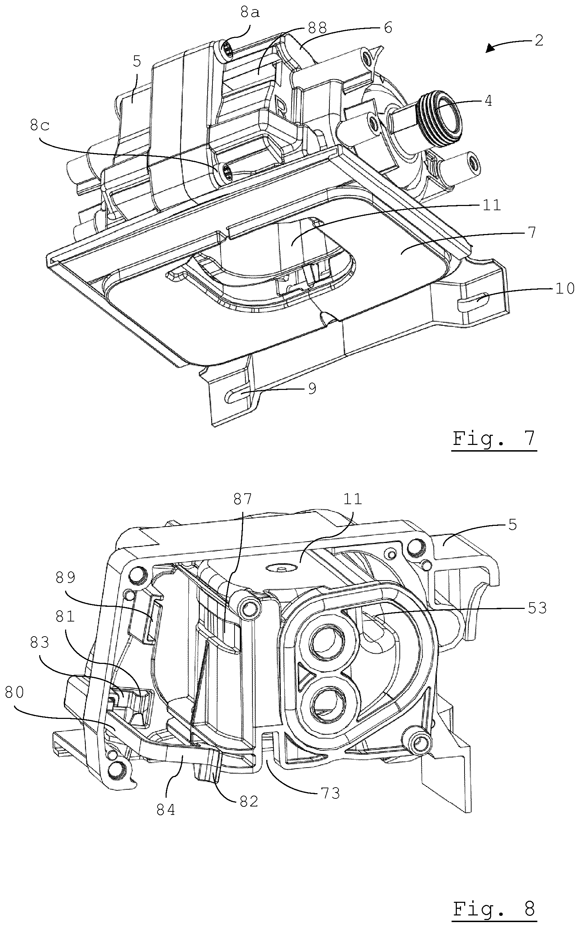

The receiving part 11 is provided with an aperture 87 (Figs. 8,10). When the connecting head 15 is inserted into the cavity, the recognition slot 31 or other feature for identifying the cartridge type is exposed through the aperture 87 to the outside of the receiving part 11, i.e. a space within the cartridge head in which the receiving part 11 is arranged to move. In the first position, and with the cartridge recognition component 85 in its operative position, the recognition protrusion 86 protrudes through the aperture 87 such as to move within the recognition slot 31 as the connecting head 15 is advanced in axial direction into the cavity of the receiving part 11. If the recognition slot 31 is not in the right place or of the right width, the recognition protrusion 86 will be unable to enter the recognition slot 31 at its axially leading end, where it is open. This will prevent the connecting head 15 of an incompatible liquid treatment cartridge 1 from being inserted far enough for the alignment ridges 32,33 to clear the ledges 74,75. The receiving part 11 and the liquid treatment cartridge 1 can thus not be moved into the second, operative position.

It is noted that the receiving part aperture is provided in a side wall section in between the side wall sections on opposite sides of the cavity in which the ports 49-52 are provided. It thus faces in a direction parallel to the plane of movement of the receiving part 11, as do the recognition protrusion 86 and recognition slot 31. Therefore, the cartridge recognition component 85 engages the recognition slot 31 of a liquid treatment cartridge 1 of the correct type only in the first position. It disengages as the receiving part 11 is moved out of the first position.

A manufacturer can individualise the head part 2 after it has been assembled, e.g. only once a firm order for a particular type of liquid treatment apparatus has been received. There is thus no need to keep head parts 2 for each different application on stock, with the risk of the stock becoming obsolete. This is because the cartridge recognition component 85 is insertable through an aperture 88 (Fig. 7) in the right housing part 6 into its ultimate position of use after the rest of the head part 2 has been assembled. In this position of use it is fixed by means of a shape-lock to the left and right housing parts 5,6. It can only be removed by disassembling the head part 2, i.e. by removing the screws 8a-c .

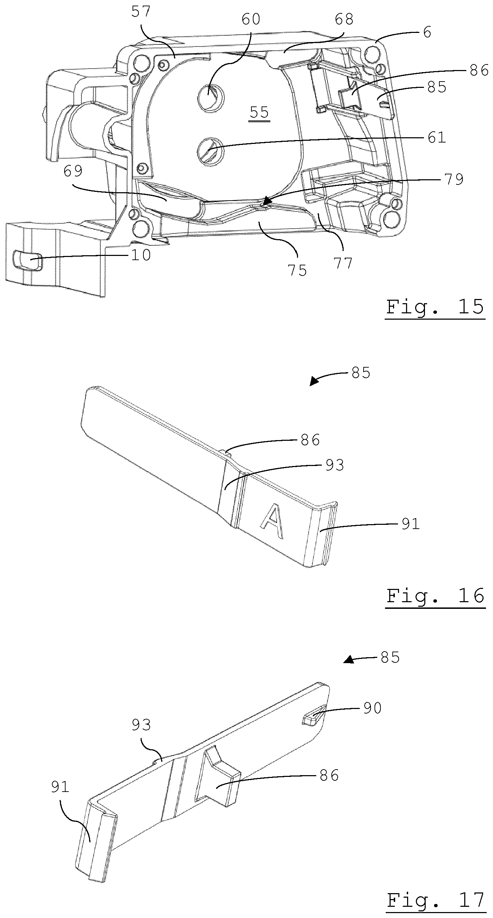

The cartridge recognition component 85 (Figs. 16,17) is an elongated structure. It may be made of plastic, for example. The recognition protrusion 86 protrudes laterally from one side. The cartridge recognition component 85 is inserted essentially in longitudinal direction into the housing of the head part 2. This direction is essentially perpendicular to the axial direction. Thus, the longitudinal position of the recognition protrusion 86 can be varied across a range of cartridge recognition components 85.

A pocket 89 (Figs. 8,9,14) is defined on the inside of the left housing part 5 for receiving a leading longitudinal end of the cartridge recognition component 85. A laterally protruding wedge-shaped guide feature 90 (Fig. 17) facilitates insertion of the leading longitudinal end into the pocket 89.

An opposite longitudinal end includes a latching part 91 that latches behind a locking feature 92 (Fig. 13) provided along an edge of the housing part aperture 88. The latching part 91 protrudes laterally from the cartridge recognition component 85, e.g. essentially at right angles to the longitudinal axis. In the illustrated embodiment, the latching part 91 includes a wedge-shaped free end forming an undercut for engaging the locking feature 92. The wedge-shaped end facilitates movement past the locking feature 92 to allow the latching part 91 to snap into place.

A further wedge-shaped part 93 (Figs. 16,17) provides an undercut that latches behind an opposite edge 94 (Fig. 13) of the housing part aperture 88 defined by an inwardly protruding section of the part of the housing part 6 framing the housing part aperture 88. As illustrated in Fig. 15, the cartridge recognition component 85 could easily be dislodged, were it not for the fact that its leading longitudinal end is held in the pocket 89. In this configuration, it is practically impossible to remove.

A manufacturer of liquid treatment apparatus formed of a head part 2 and a liquid treatment cartridge 1 can assemble a number of head parts 2 without cartridge recognition component 85. They are all the same, including the receiving part 11 and can be kept on stock. When a need for a head part 2 for use with a particular type of liquid treatment cartridge 1 arises, the appropriate cartridge recognition component 85 is selected, inserted through the housing part aperture 88 and thereby fixed in place. Thereafter, only a liquid treatment cartridge 1 with the matching recognition slot 31 can be inserted into the head part 2 and moved into the second, operative position.

To make it easier to identify the intended type of liquid treatment cartridge 1, the cartridge recognition component 85 may have a colour matching that of the inlay 30, or that of a label or printed section of the surface of the liquid treatment cartridge 1. Alternatively, a pattern or other marking may be used that is common to an exterior surface section of the liquid treatment cartridge 1 and at least a section of the surface of the cartridge recognition component 85 that remains visible when the cartridge recognition component 85 has been mounted to the head part 2.

The invention is not limited to the embodiments described above, which can be varied within the scope of the accompanying claims. It is, for example, possible to have multiple recognition protrusions 86 and recognition slots 31 on the cartridge recognition component 85 and connecting head 15, respectively. The cartridge recognition component 85 could be provided on an opposite side of the head part 2 (and the receiving part aperture 87 on the corresponding side of the receiving part 11). In that case, the connecting head 15 of an incompatible liquid treatment cartridge 1 could be inserted to the maximum possible extent when the receiving part 11 is in the first position, but the second position could never be fully reached. However, this would require quite a long recognition protrusion 86 in order to prevent the valve mechanism in the head part 2 from opening partially.

### List of reference numerals

- 1: - liquid treatment cartridge
- 2: - head part
- 3: - inlet connector
- 4: - outlet connector
- 5: - left housing part
- 6: - right housing part
- 7: - bottom plate
- 8a-c: - screw
- 9: - left mounting aperture
- 10: - right mounting aperture
- 11: - receiving part
- 12: - cap-shaped housing part
- 13: - vessel-shaped housing part
- 14: - cartridge axis
- 15: - connecting head
- 16: - 1^{st} cartridge port
- 17: - 2^{nd} cartridge port
- 18: - 3^{rd} cartridge port
- 19: - 4^{th} cartridge port
- 20: - 1^{st} exterior surface section
- 21: - 2^{nd} exterior surface section
- 22: - 1^{st} cartridge sealing ring
- 23: - 2^{nd} cartridge sealing ring
- 24: - 3^{rd} cartridge sealing ring
- 25: - 4^{th} cartridge sealing ring
- 26: - 1^{st} channel
- 27: - 2^{nd} channel
- 28: - 3^{rd} channel
- 29: - 4^{th} channel
- 30: - inlay
- 31: - recognition slot
- 32: - 1^{st} alignment ridge
- 33: - 2^{nd} alignment ridge
- 34: - rounded end of first alignment ridge
- 35: - rounded end of second alignment ridge
- 36: - 1^{st} curved surface section
- 37: - 2^{nd} curved surface section
- 38: - 1^{st} section of 1^{st} alignment ridge
- 39: - 1^{st} section of 2^{nd} alignment ridge
- 40: - 2^{nd} section of first alignment ridge
- 41: - 2^{nd} section of second alignment ridge
- 42: - 1^{st} receiving part sealing element
- 43: - 2^{nd} receiving part sealing element
- 44: - 3^{rd} receiving part sealing element
- 45: - 4^{th} receiving part sealing element
- 46: - 5^{th} receiving part sealing element
- 47: - 6^{th} receiving part sealing element
- 48: - receiving part reference axis
- 49: - 1^{st} receiving part port
- 50: - 2^{nd} receiving part port
- 51: - 3^{rd} receiving part port
- 52: - 4^{th} receiving part port
- 53: - bypass channel
- 54: - left interior surface of housing
- 55: - right interior surface of housing
- 56: - left screening part
- 57: - right screening part
- 58: - 1^{st} housing port
- 59: - 2^{nd} housing port
- 60: - 3^{rd} housing port
- 61: - 4^{th} housing port
- 62: - 1^{st} guide protrusion
- 63: - 2^{nd} guide protrusion
- 64: - 3^{rd} guide protrusion
- 65: - 4^{th} guide protrusion
- 66: - 1^{st} guide
- 67: - 2^{nd} guide
- 68: - 3^{rd} guide
- 69: - 4^{th} guide
- 70: - 1^{st} alignment groove
- 71: - 2^{nd} alignment groove
- 72: - slit forming part of 1^{st} alignment groove
- 73: - slit forming part of 2^{nd} alignment groove
- 74: - ledge on left housing part
- 75: - ledge on right housing part
- 76: - left gap
- 77: - right gap
- 78: - left detent
- 79: - right detent
- 80: - latching device
- 81: - left pawl
- 82: - right pawl
- 83: - left arm
- 84: - right arm
- 85: - cartridge recognition component
- 86: - recognition protrusion
- 87: - receiving part aperture
- 88: - housing part aperture
- 89: - pocket
- 90: - wedge-shaped guide feature
- 91: - latching part
- 92: - locking feature
- 93: - wedge-shaped part
- 94: - housing part aperture edge

## Claims

1. Set of parts for assembling at least one head part (2) for forming a liquid treatment apparatus, which head part (2) includes:
a housing, into which at least part of a connecting head (15) of a liquid treatment cartridge (1) is insertable; and
a cartridge recognition component (85), exposed to an interior of the housing in at least an operative position, for co-operating with the inserted part of the connecting head (15) such that at least the part of the connecting head (15) to be inserted of only a cartridge (1) with a feature (31) shaped to fit the exposed part of the cartridge recognition component (85) can reach an operative position in the head part (2), **characterised in that**
the set of parts includes at least two cartridge recognition components (85), each capable of being mounted to the housing, wherein at least two of the cartridge recognition components (85) have differently-shaped exposed parts to fit cartridge features (31) differing in terms of at least one of position and shape.

2. Set of parts according to claim 1,
wherein the housing is provided with an aperture (88),
wherein any one of the cartridge recognition components (85) is insertable through the aperture (88) into the operative position, and
wherein the cartridge recognition component (85) is fixable in the operative position.

3. Set of parts according to claim 2,
wherein the housing includes a shell formed of at least two parts (5,6) joined together,
wherein the aperture (88) through which the cartridge recognition component (85) is insertable is provided in at least one of the shell parts (5,6), and
wherein the cartridge recognition component (85) is releasable from the operative position only by disassembling the shell parts (5,6).

4. Set of parts according to claim 3,
wherein the aperture (88) is provided in only one of the shell parts (5,6).

5. Set of parts according to any one of claims 2-4,
wherein at least one of each cartridge recognition component (85) and the housing includes at least one latching part (91,93) arranged to snap into interlocking engagement with a part (92,94) of the other of the cartridge recognition component (85) and the housing on insertion of the cartridge recognition component (85) into the operative position.

6. Set of parts according to any one of claims 2-5,
wherein each of the cartridge recognition components (85) has an elongated shape, and
wherein each of the cartridge recognition components (85) is insertable through the aperture (88) in longitudinal direction.

7. Set of parts according to any one of claims 2-6,
wherein the exposed part of each of the cartridge recognition components (85) faces in a direction transverse, e.g. perpendicular, to a direction of insertion through the aperture (88) in the operative position.

8. Method of assembling a head part (2)for forming a liquid treatment apparatus, which head part (2) includes:
a housing, into which at least part of a connecting head (15) of a liquid treatment cartridge (1) is insertable; and
a cartridge recognition component (85), exposed to an interior of the housing in at least an operative position, for co-operating with the inserted part of the connecting head (15) such that at least the part of the connecting head (15) to be inserted of only a cartridge (1) with a feature (31) shaped to fit the exposed part of the cartridge recognition component (85) can reach an operative position in the head part (2), the method including:
selecting a cartridge recognition component (85); and
mounting the selected cartridge recognition component (85) to the housing, **characterised in that**
the cartridge recognition component (85) is selected from at least two cartridge recognition components (85), each capable of being mounted to the housing,
wherein at least two of the cartridge recognition components (85) have differently-shaped exposed parts to fit cartridge features (31) differing in terms of at least one of position and shape.

9. Method according to claim 8, further including providing a replaceable liquid treatment cartridge (1) including at least one feature (31) shaped to fit the exposed part of the selected cartridge recognition component (85),
wherein the feature (31) is defined in a part (30) separate from and joined to a remainder of the liquid treatment cartridge (1).

10. Method according to claim 9,
wherein the part (30) in which the feature (31) is defined is joined by a bond to the remainder of the liquid treatment cartridge (1).

## Patentansprüche

1. Teilesatz zur Montage mindestens eines Kopfteils (2) zum Bilden einer Flüssigkeitsbehandlungseinrichtung, wobei der Kopfteil (2) beinhaltet:
ein Gehäuse, in das mindestens ein Teil eines Verbindungskopfes (15) einer Flüssigkeitsbehandlungskartusche (1) einführbar ist; und
eine Kartuschen-Erkennungskomponente (85), die einem Inneren des Gehäuses in mindestens einer Betriebsposition ausgesetzt ist, zum Zusammenwirken mit dem eingeführten Teil des Verbindungskopfes (15), sodass mindestens der einzuführende Teil des Verbindungskopfes (15) von nur einer Kartusche (1) mit einem Merkmal (31), geformt, um zum ausgesetzten Teil der Kartuschen-Erkennungskomponente (85) zu passen, eine Betriebsposition in dem Kopfteil (2) erreichen kann, **dadurch gekennzeichnet, dass**
der Teilesatz mindestens zwei Kartuschen-Erkennungskomponenten (85) beinhaltet, von denen jede imstande ist, an dem Gehäuse angebracht zu werden, wobei mindestens zwei der Kartuschen-Erkennungskomponenten (85) unterschiedlich geformte ausgesetzte Teile aufweisen, um zu den Merkmalen der Kartusche (31) zu passen, die sich in mindestens einem aus Position und Form unterscheiden.

2. Teilesatz nach Anspruch 1,
wobei das Gehäuse mit einer Öffnung (88) bereitgestellt ist,
wobei eine beliebige der Kartuschen-Erkennungskomponenten (85) durch die Öffnung (88) hindurch in die Betriebsposition einführbar ist, und
wobei die Kartuschen-Erkennungskomponente (85) in der Betriebsposition befestigt werden kann.

3. Teilesatz nach Anspruch 2,
wobei das Gehäuse eine Hülle beinhaltet, die aus mindestens zwei zusammengesetzten Teilen (5,6) gebildet wird,
wobei die Öffnung (88), durch die hindurch die Kartuschen-Erkennungskomponente (85) eingeführt werden kann, in mindestens einem von den Hüllenteilen (5,6) bereitgestellt ist, und
wobei die Kartuschen-Erkennungskomponente (85) aus der Betriebsposition nur durch Zerlegen der Hüllenteile (5,6) lösbar ist.

4. Teilesatz nach Anspruch 3,
wobei die Öffnung (88) in nur einem von den Hüllenteilen (5,6) bereitgestellt ist.

5. Teilesatz nach einem der Ansprüche 2-4,
wobei mindestens eines von jeder Kartuschen-Erkennungskomponente (85) und dem Gehäuse mindestens ein Verriegelungsteil (91,93) beinhaltet, angeordnet, um in ineinander greifendem Eingriff mit einem Teil (92,94) des anderen von der Kartuschen-Erkennungskomponente (85) und dem Gehäuse beim Einführen der Kartuschen-Erkennungskomponente (85) in die Betriebsposition einzurasten.

6. Teilesatz nach einem der Ansprüche 2-5,
wobei jede der Kartuschen-Erkennungskomponenten (85) eine längliche Form aufweist, und
wobei jede der Kartuschen-Erkennungskomponenten (85) durch die Öffnung (88) hindurch in Längsrichtung einführbar ist.

7. Teilesatz nach einem der Ansprüche 2-6,
wobei der ausgesetzte Teil einer jeden der Kartuschen-Erkennungskomponenten (85) in eine Richtung quer, z.B. senkrecht, zu einer Einführungsrichtung durch die Öffnung (88) in der Betriebsposition hindurch zeigt.

8. Verfahren zur Montage eines Kopfteils (2) zum Bilden einer Flüssigkeitsbehandlungseinrichtung, wobei der Kopfteil (2) beinhaltet:
ein Gehäuse, in das mindestens ein Teil eines Verbindungskopfes (15) einer Flüssigkeitsbehandlungskartusche (1) einführbar ist; und
eine Kartuschen-Erkennungskomponente (85), die einem Inneren des Gehäuses in mindestens einer Betriebsposition ausgesetzt ist, zum Zusammenwirken mit dem eingeführten Teil des Verbindungskopfes (15), sodass mindestens der einzuführende Teil des Verbindungskopfes (15) von nur einer Kartusche (1) mit einem Merkmal (31), geformt, um zum ausgesetzten Teil der Kartuschen-Erkennungskomponente (85) zu passen, eine Betriebsposition in dem Kopfteil (2) erreichen kann, wobei das Verfahren beinhaltet:
Auswählen einer Kartuschen-Erkennungskomponente (85); und
Anbringen der ausgewählten Kartuschen-Erkennungskomponente (85) an dem Gehäuse, **dadurch gekennzeichnet, dass**
die Kartuschen-Erkennungskomponente (85) aus mindestens zwei Kartuschen-Erkennungskomponenten (85) ausgewählt wird, von denen jede imstande ist, am Gehäuse angebracht zu werden,
wobei mindestens zwei der Kartuschen-Erkennungskomponenten (85) unterschiedlich geformte ausgesetzte Teile aufweisen, um zu den Merkmalen der Kartusche (31) zu passen, die sich in mindestens einem aus Position und Form unterscheiden.

9. Verfahren nach Anspruch 8, weiter das Bereitstellen einer ersetzbaren Flüssigkeitsbehandlungskartusche (1) beinhaltend, die mindestens ein Merkmal (31) beinhaltet, das geformt ist, um zum ausgesetzten Teil der ausgewählten Kartuschen-Erkennungskomponente (85) zu passen,
wobei das Merkmal (31) in einem Teil (30) definiert ist, der davon getrennt und mit einem Rest der Flüssigkeitsbehandlungskartusche (1) verbunden ist.

10. Verfahren nach Anspruch 9,
wobei der Teil (30), in dem das Merkmal (31) definiert ist, durch eine Bindung mit dem Rest der Flüssigkeitsbehandlungskartusche (1) verbunden ist.

## Revendications

1. Ensemble de pièces pour l'assemblage d'au moins une partie de tête (2) pour la formation d'un appareil de traitement des liquides, laquelle partie de tête (2) inclut :
un logement, dans lequel au moins une partie d'une tête de raccordement (15) d'une cartouche de traitement de liquide (1) est insérable ; et
un composant de reconnaissance de cartouche (85), exposé à un intérieur du logement dans au moins une position fonctionnelle, pour coopérer avec la partie insérée de la tête de raccordement (15) de telle manière qu'au moins la partie de la tête de raccordement (15) devant être insérée d'une seule cartouche (1) comportant un élément (31) façonné pour correspondre à la partie exposée du composant de reconnaissance de cartouche (85) peut atteindre une position fonctionnelle dans la partie de tête (2) **caractérisé en ce que**
l'ensemble de pièces inclut au moins deux composants de reconnaissance de cartouche (85), chacun pouvant être monté sur le logement, dans lequel au moins deux des composants de reconnaissance de cartouche (85) présentent des parties exposées de forme différente pour s'adapter aux caractéristiques de cartouche (31) qui diffèrent en termes d'au moins une parmi la position et la forme.

2. Ensemble de pièces selon la revendication 1,
dans lequel le logement est pourvu d'une ouverture (88),
dans lequel le composant de reconnaissance de cartouche (85) est insérable à travers l'ouverture (88) dans la position fonctionnelle, et
dans lequel le composant de reconnaissance de cartouche (85) peut être fixé dans la position fonctionnelle.

3. Ensemble de pièces selon la revendication 2,
dans lequel le logement inclut une enveloppe formée d'au moins deux parties (5,6) reliées ensemble,
dans lequel l'ouverture (88) à travers laquelle le composant de reconnaissance de cartouche (85) est insérable est fournie dans au moins l'une des parties d'enveloppe (5,6), et
dans lequel le composant de reconnaissance de cartouche (85) ne peut être libéré de la position fonctionnelle que par démontage des parties d'enveloppe (5,6).

4. Ensemble de pièces selon la revendication 3,
dans lequel l'ouverture (88) est fournie dans une seule des parties d'enveloppe (5,6).

5. Ensemble de pièces selon l'une quelconque des revendications 2-4,
au moins l'un du composant de reconnaissance de cartouche (85) et du logement inclut au moins une partie de verrouillage (91,93) agencée pour s'encliqueter dans une mise en prise à interverrouillage avec une partie (92,94) de l'autre du composant de reconnaissance de cartouche (85) et du logement lors de l'insertion du composant de reconnaissance de cartouche (85) dans la position fonctionnelle.

6. Ensemble de pièces selon l'une quelconque des revendications 2-5,
dans lequel le composant de reconnaissance de cartouche (85) présente une forme allongée, et
dans lequel le composant de reconnaissance de cartouche (85) est insérable à travers l'ouverture (88) dans la direction longitudinale.

7. Ensemble de pièces selon l'une quelconque des revendications 2-6,
dans lequel la partie exposée du composant de reconnaissance de cartouche (85) est orientée dans une direction transversale, par exemple perpendiculaire, à une direction d'insertion à travers l'ouverture (88) dans la position fonctionnelle.

8. Procédé d'assemblage d'une partie de tête (2) pour la formation d'un appareil de traitement des liquides, laquelle partie de tête (2) inclut :
un logement, dans lequel au moins une partie d'une tête de raccordement (15) d'une cartouche de traitement de liquide (1) est insérable ; et
un composant de reconnaissance de cartouche (85), exposé à un intérieur du logement dans au moins une position fonctionnelle, pour coopérer avec la partie insérée de la tête de raccordement (15) de telle manière qu'au moins la partie de la tête de raccordement (15) devant être insérée d'une seule cartouche (1) comportant un élément (31) façonné pour correspondre à la partie exposée du composant de reconnaissance de cartouche (85) peut atteindre une position fonctionnelle dans la partie de tête (2), le procédé incluant :
la sélection du composant de reconnaissance de cartouche (85) ; et
le montage du composant de reconnaissance de cartouche (85) sélectionné sur le logement, **caractérisé en ce que**
le composant de reconnaissance de cartouche (85) est sélectionné à partir d'au moins deux composants de reconnaissance de cartouche (85), chacun apte à être monté sur le logement,
dans lequel au moins deux des composants de reconnaissance de cartouche (85) présentent des parties exposées façonnées différemment pour correspondre à des éléments de cartouche (31) différant en termes d'au moins l'une de la position et de la forme.

9. Procédé selon la revendication 8, incluant en outre la fourniture d'une cartouche de traitement de liquide (1) remplaçable incluant au moins un élément (31) façonné pour correspondre à la pièce exposée du composant de reconnaissance de cartouche (85) sélectionné,
dans lequel l'élément (31) est défini dans une partie (30) séparée et reliée à un reste de la cartouche de traitement de liquide (1).

10. Procédé selon la revendication 9,
dans lequel la partie (30) dans laquelle l'élément (31) est défini est reliée par une liaison au reste de la cartouche de traitement de liquide (1).
